# EUROPEAN PATENT SPECIFICATION

(11) **EP 0 630 333 B1**
(45) Date of publication and mention of the grant of the patent: **15.01.1997**
(21) Application number: 93906948.0
(22) Date of filing: 18.03.1993
(51) Int. Cl.: B62B 3/00

(54) **STEERING DEVICE FOR A TRANSPORT VEHICLE**
LENKVORRICHTUNG FÜR TRANSPORTFAHRZEUG
SYSTEME DE DIRECTION DESTINE A UN VEHICULE DE TRANSPORT

(30) Priority: 18.03.1992 SE 9200834
(43) Date of publication of application: 28.12.1994
(73) Proprietor: Östling, Jan-Erik, 830 44 Nalden (SE)
(72) Inventor: Östling, Jan-Erik, 830 44 Nalden (SE)
(74) Representative: Hellborg, Torild
(86) International application number: SE9300231
(87) International publication number: WO9318954

(56) References cited:
- US-A- 2 497 357
- US-A- 3 408 089
- US-A- 3 455 572

## Description

The invention relates to a steering device for a transport vehicle with at least one front wheel and at least one rear wheel, each wheel being suspended for turning about a steering axis, essentially perpendicular to the supporting surface on which the wheels are intended to roll, in which device at least one of the front wheels is coupled via a front tie rod to an operating means in such a manner that pivot movements of the operating means in a plane are transmitted via the front tie rod to steering movements of the front wheel, and at least one of the rear wheels is coupled via a rear tie rod to a transmission means, disposed to be actuated by movements of the operating means to effect steering movements of the rear wheel.

Four-wheeled transport vehicles with such steering devices are previously known (cf for example US-A-3 408 089), where the front wheels and the rear wheels are turned in different directions to facilitate taking sharp curves of short radii. When operating in confined spaces it can, however, be difficult, even with vehicles with this type of steering coupled to the front and rear wheels, to place and direct the vehicle in the desired manner.

The purpose of the invention is to provide a steering device for a transport vehicle of the type described by way of introduction having improved maneuverability, and according to the invention this is achieved by virtue of the fact that the transmission means is coupled to the operating means via a linkage system for transmission of torsional movements of the operating means to steering movements of at least one rear wheel independently of pivotal movements of the operating means.

Further developments of the steering device according to the invention are disclosed in the subclaims.

The invention will be described in more detail below with reference to the accompanying drawings, which illustrate schematically different embodiments of the steering device according to the invention and in which
- fig 1: is a perspective view of a steering device for a transport vehicle according to a first embodiment, where all the wheels are directly actuated by an operating means,
- fig 2: is a perspective view of a steering device according to a second embodiment, where one front wheel and one rear wheel are directly actuated by the operating means and the other wheels are actuated by the movement of the vehicle,
- fig 3: is a side view of a linkage system between the operating means and the transport vehicle according to fig 1 or fig 2, and
- fig 4: is a view from above of the linkage system according to fig 3.

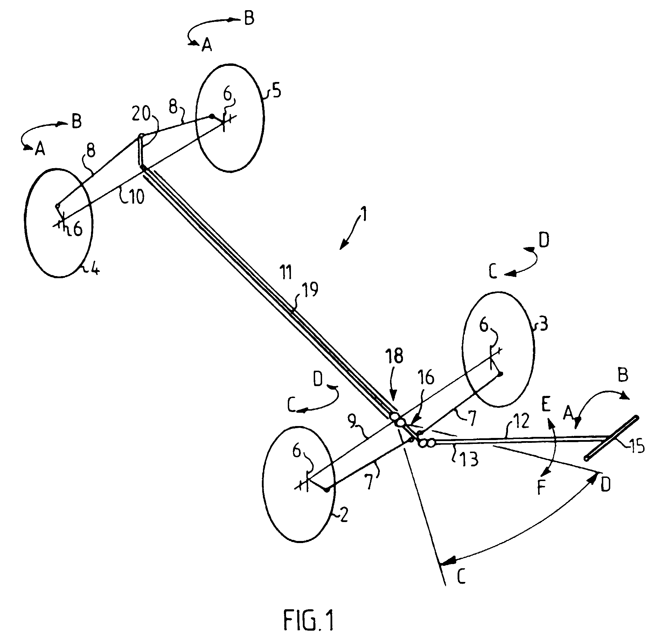

Fig 1 shows a steering device for a transport vehicle 1 with two front wheels 2, 3 and two rear wheels 4, 5, which can be steered about steering axes 6 under the influence of a front tie rod 7 and a rear tie rod 8. Of the transport vehicle 1 itself there is only shown a front axle 9 and a rear axle 10 and a boom 11 connecting the front axle 9 to the rear axle 10.

The transport vehicle 1 is steered with an operating means 12, which is pivotable in various directions. The operating means 12 consists of a pull bar 13 which is used to move the vehicle 1, and an inner bar 14, in the outer end of which there is mounted a pulling and steering handle 15. The inner bar 14 is rotatably mounted in the pull bar 13 and is secured against movements in the longitudinal direction of the pull bar 13.

The pull bar 13 is articulated at its inner end to the front axle 9 or to another portion of the transport vehicle 1 via a linkage system 16, and, spaced from the front axle 9, the front tie rods 7 are articulated to an outer steering portion 17 of the linkage system 16. This means that a pivot movement of the operating means 12 about its inner end within the sector indicated by the arrows C-D will turn the front wheels 2, 3 about their steering axes 6. The pivot movement of the operating means 12 takes place in a plane which is essentially parallel to the surface on which the vehicle 1 is placed.

A torsional movement of the inner bar 14 in the operating means 12 about its longitudinal axis actuates the turning movement of the rear wheels 4, 5 about their steering axes 6 via the linkage system 16 and a transmission means 18, in the form of a rotatable shaft 19, which is rotatably mounted in the boom 11 in order to transmit torsional movement imparted by the steering handle 15. Said torsional movements are converted with the aid of an arm 20 fixed to the rotatable shaft 19 into steering movements of the rear tie rod 8. The transmission means 18 can, for example, also consist of a steering wire, with or without a jacket, which, however, is not shown in the figures.

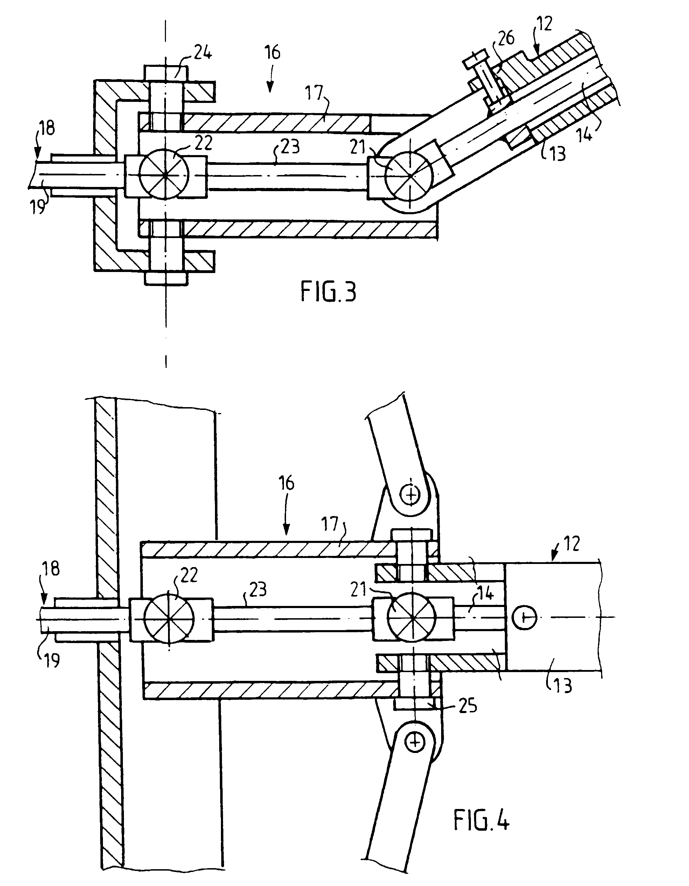

Figs 3 and 4 show the linkage system 16 between the operating means 12 and the vehicle 1, the linkage system transmitting torsional movement from the pulling and steering handle 15 to the transmission means 18 via a first universal joint 21 and a second universal joint 22, which are coupled to each other via an inner steering portion 23, which is rotatably mounted in the outer steering portion 17. The universal joints 21, 22 can consist of simple knuckle joints. Simple knuckle joints have, however, the disadvantage that the angle between the shafts for transmission of the torsional movements, is limited to the approximate interval between -45 degrees and +45 degrees. In certain embodiments of the vehicle, a pivot angle within this interval between the operating means 12 and the vehicle should be sufficient. In other embodiments of the vehicle, it is desirable that the operating means 12 be able to be pivoted to an angle of 90 degrees between the operating means 12 and the vehicle 1. This requires that the first universal joint 21 consist of a conical gear transmission or double knuckle joints, which can transmit torsional movements in the interval between -90 degrees and +90 degrees.

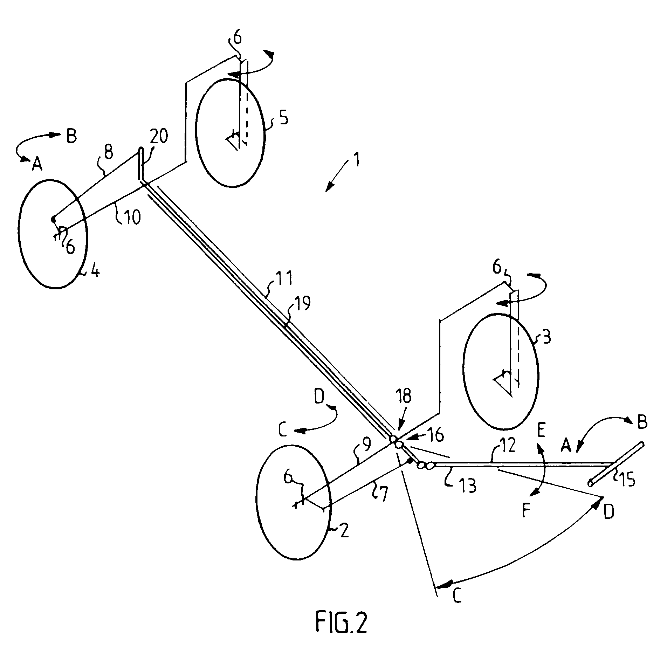

The outer steering portion 17, at its end facing the vehicle, is mounted in a first bearing means 24 for pivot movements in the sector indicated by the arrows C-D in figs 1 and 2. Another bearing means 25 is arranged at the other end of the outer steering portion 17, said bearing means permitting pivot movements of the operating means 12 in the sector indicated by the arrows E-F, essentially perpendicular to the plane of the supporting surface.

In another embodiment of the steering device of the transport vehicle 1, which is shown in fig 2, the steering of one front wheel 2 and one rear wheel 4 is effected directly by the operating means 12 via the front tie rod 7 and a rear tie rod 8, while the steering of the other wheels 3, 5 is effected by the movement of the vehicle by virtue of the fact that said wheels have a so-called castor suspension, which permits the wheels to follow the direction determined by the vehicle. Such an arrangement provides significantly lower steering friction forces, and this makes the vehicle easier to maneuver, especially when it is heavily loaded.

The steering angle of the rear wheels can be locked by a blocking device 26, which is disposed on the operating means 12 and which engages the inner bar 14 and locks it against torsional movements.

The length of the vehicle can also be changed due to the fact that the boom 11 is constructed so that its length can be varied, the rotatable shaft 19 being constructed in a corresponding manner. The change in length is made possible, for example, by virtue of the fact that the boom 11 and the rotatable shaft 19 are telescopically arranged.

If desired, the vehicle can also be equipped with a simple auxiliary motor to facilitate pulling and maneuvering of the vehicle.

The vehicle can also be provided with a pulling device so that it can be pulled behind and be operated from a tractor.

## Claims

1. Steering device for a transport vehicle (1) with at least one front wheel (2,3) and at least one rear wheel (4,5), each wheel being suspended for turning about a steering axis (6), essentially perpendicular to the supporting surface on which the wheels (2,3,4,5) are intended to roll, in which device at least one of the front wheels (2,3) is coupled via a front tie rod (7) to an operating means (12) in such a manner that pivot movements of the operating means (12) in a plane are transmitted via the front tie rod (7) to steering movements of the front wheel (2,3), and at least one of the rear wheels (4,5) is coupled via a rear tie rod (8) to a transmission means (18), disposed to be actuated by movements of the operating means (12) to effect steering movements of the rear wheel (4,5), **characterized** in that the transmission means (18) is coupled to the operating means (12) in a linkage system (16) for transmission of torsional movements of the operating means (12) to steering movements of at least one rear wheel (4,5) independently of pivotal movements of the operating means (12).

2. Steering device according to Claim 1, **characterized** in that the pivot movement of the operating means (12) takes place in a plane (C-D) which is essentially parallel to the supporting surface, and that the torsional movements (A-B) of the operating means (12) take place about its longitudinal axis.

3. Steering device according to Claim 1 or 2, **characterized** in that the transmission means (18) comprises a shaft (19) which is rotatable in the longitudinal direction of the vehicle, on which said shaft and arm (20) are mounted.

4. Steering device according to one or more of Claims 1 - 3, **characterized** in that the operating means (12) comprises a pull bar (13), in which an inner bar (14) is rotatably mounted and is joined to the transmission means (18) via the linkage system (16).

5. Steering device according to one or more of Claims 1 - 4, **characterized** in that the linkage system (16) comprises a first universal joint (21) and a second universal joint (22), which are coupled to each other via an inner steering portion (23), which is rotatably mounted in an outer steering portion (17), said outer steering portion (17) having at one end a first bearing means (24), which is journalled in the transport vehicle (1), and at its other end has a second bearing means (25), in which the operating means (12) is journalled.

6. Steering device according to one or more of Claims 1 - 5, **characterized** in that a blocking device (26), disposed on the operating device (12), can engage the inner bar (14) and lock it against torsional movements.

7. Steering device according to one of Claims 1 - 6, **characterized** in that the transmission means (18) and a boom (11), joining a front axle (9) and a rear axle (10) of the transport vehicle (1), are telescopically arranged so that the distance between the front (2,3) and rear wheels (4,5) can be changed.

## Patentansprüche

1. Steuerungsvorrichtung für ein Transportfahrzeug (1) mit mindestens einem Vorderrad (2, 3) und mindestens einem Hinterrad (4, 5), wobei jedes Rad drehbar um eine Steuerungsachse (6) aufgehängt ist, die im wesentlichen senkrecht zu der tragenden Oberfläche ist, auf der die Räder (2, 3, 4, 5) rollen sollen, wobei in der Vorrichtung mindestens eines der Vorderräder (2, 3) mittels eine vordere Zugstange (7) mit einem Betriebsmittel (12) in eine solchen Weise verbunden ist, daß die Drehbewegungen des Betriebsmittels (12) in einer Ebene mittels der vorderen Zugstange (7) in Steuerungsbewegungen des Vorderrads übertragen werden, und mindestens eines der hinteren Räder (4, 5) mittels einer hinteren Zugstange (8) mit einem Übertragungsmittel (18) verbunden ist, das durch die Bewegungen des Betriebsmittels (12) angetrieben wird, um eine Steuerungsbewegung des hinteren Rades (4, 5) zu bewirken,
**dadurch gekennzeichnet,**
daß das Übertragungsmittel (18) mit dem Betriebsmittel (12) in einem Verbindungssystem (16) zur Übertragung der Torsionsbewegungen des Betriebsmittels (12) in Steuerungsbewegungen von mindestens einem der hinteren Räder (4, 5) unabhängig von Drehbewegungen des Betriebsmittels (12) verbunden ist.

2. Steuerungsvorrichtung nach Anspruch 1, **dadurch gekennzeichnet,** daß die Drehbewegung des Betriebsmittels (12) in einer Ebene (C-D) stattfindet, die im wesentlichen parallel zur tragenden Oberfläche ist, und daß die Torsionsbewegungen (A-B) des Betriebsmittels (12) um seine longitudinale Achse stattfindet.

3. Steuerungsvorrichtung nach Anspruch 1 oder 2, **dadurch gekennzeichnet,** daß das Übertragungsmittel (18) einen Schaft (19) aufweist, der in der longitudinalen Richtung des Fahrzeugs drehbar ist, an dem der Schaft und Arm (20) befestigt sind.

4. Steuerungsvorrichtung nach einem oder mehreren der Ansprüche 1 - 3, **dadurch gekennzeichnet,** daß das Betriebsmittel (12) eine Zugstange (13) aufweist, in der eine innere Stange (14) drehbar befestigt und mit dem Übertragungsmittel (18) über das Verbindungssystem (16) verbunden ist.

5. Steuerungsvorrichtung nach einem oder mehreren der Ansprüche 1 - 4 , **dadurch gekennzeichnet,** daß das Verbindungsystem (16) einen ersten universellen Verbinder (21) und einen zweiten universellen Verbinder (22) aufweist, die über einen inneren Steuerungsabschnitt (23) miteinander verbunden sind, der drehbar in einem äußeren Steuerungsabschnitt (17) befestigt ist, wobei der äußere Steuerungsabschnitt (17) an seinem einen Ende ein erstes Lagermittel (24), das in dem Transportfahrzeug (1) drehbar gelagert ist, und an seinem anderen Ende ein zweites Lagermittel (25) aufweist, in dem das Betriebsmittel (12) drehbar gelagert ist.

6. Steuerungsvorrichtung nach einem oder mehreren der Ansprüche 1 - 5, **dadurch gekennzeichnet,** daß eine auf dem Betriebsmittel (12) angeordnete Sperrvorrichtung (26) mit der inneren Stange (14) kuppeln und diese gegen Torsionsbewegungen verriegeln kann.

7. Steuerungsvorrichtung nach einem oder mehreren der Ansprüche 1 - 6, **dadurch gekennzeichnet,** daß das Übertragungsmittel (18) und ein Längsholm (11), der eine Vorderachse (9) und eine Hinterachse (10) des Transportfahrzeugs miteinander verbindet, teleskopartig beschaffen ist, so daß der Abstand zwischen den Vorder- (2, 3) und den Hinterrädern (4, 5) verändert werden kann.

## Revendications

1. Dispositif de direction destiné à un véhicule (1) de transport ayant au moins une roue (2, 3) avant et au moins une roue (4, 5) arrière, chaque roue étant suspendue de manière à tourner autour d'un axe (6) de direction essentiellement perpendiculaire à la surface de support sur laquelle les roues (2, 3, 4, 5) sont destinées à rouler, dispositif dans lequel l'une au moins des roues (2, 3) avant est couplée par une barre d'accouplement (7) frontale à des moyens (12) d'actionnement de façon que des mouvements de pivotements des moyens (12) d'actionnement dans un plan soient transformés par la barre d'accouplement (7) frontale en des mouvements de direction de la roue (2, 3) avant, et l'une au moins des roues (4, 5) arrière est couplée par une barre d'accouplement (8) arrière à des moyens (18) de transmission disposés de manière à être actionnés par des mouvements des moyens (12) d'actionnement pour donner des mouvements de direction de la roue (4, 5) arrière, caractérisé en ce que les moyens (18) de transmission sont couplés aux moyens (12) d'actionnement dans un système (16) de timonerie destiné à transformer des mouvements de torsion des moyens 12 d'actionnement en des mouvements de direction d'au moins une roue (4, 5) arrière, indépendamment des mouvements de pivotement des moyens (12) d'actionnement.

2. Dispositif de direction suivant la revendication 1, caractérisé en ce que le mouvement de pivotement des moyens (12) d'actionnement a lieu dans un plan (C-D) qui est essentiellement parallèle à la surface de support et en ce que les mouvements (A-B) de torsion des moyens (12) d'actionnement ont lieu autour de l'axe longitudinal de ceux-ci.

3. Dispositif de direction suivant la revendication 1 ou 2, caractérisé en ce que les moyens (18) de transmission comprennent un arbre (19) qui peut tourner dans la direction longitudinale du véhicule, sur laquelle cet arbre et un bras (20) sont montés.

4. Dispositif de direction suivant l'une ou plusieurs des revendications 1 à 3, caractérisé en ce que les moyens (12) d'actionnement comprennent une barre (13) de traction, dans laquelle une barre (14) intérieure est montée à rotation et est articulée aux moyens (18) de transmission par l'intermédiaire du système (16) de timonerie.

5. Dispositif de direction suivant l'une ou plusieurs des revendications 1 à 4, caractérisé en ce que le système (16) de timonerie comprend un premier joint (21) à la cardan et un second joint (22) à la cardan, qui sont couplés l'un à l'autre par l'intermédiaire d'une partie (23) intérieure de direction qui est montée à rotation dans une partie (17) extérieure de direction, la partie (17) extérieure de direction ayant à une extrémité des premiers moyens (24) de palier qui sont tourillonnés dans le véhicule (1) de transport et à son autre extrémité des seconds moyens (25) de palier, dans lesquels les moyens (12) d'actionnement sont tourillonnés.

6. Dispositif de direction suivant l'une ou plusieurs des revendications 1 à 5, caractérisé en ce qu'un dispositif (26) d'arrêt, monté sur le dispositif (12) d'actionnement, peut venir en contact avec la barre (14) intérieure et l'empêcher d'effectuer des mouvements de torsion.

7. Dispositif de direction suivant l'une ou plusieurs des revendications 1 à 6, caractérisé en ce que les moyens (18) de transmission et une membrure (11) reliant un essieu (9) avant et un essieu (10) arrière du véhicule (1) de transport sont montés télescopiquement de manière que la distance entre les roues avant (2, 3) et arrière (4, 5) puisse être modifiée.
